# EUROPÄISCHE PATENTSCHRIFT

(11) **EP 1 674 435 B1**
(45) Veröffentlichungstag und Bekanntmachung des Hinweises auf die Patenterteilung: **07.03.2007**
(21) Anmeldenummer: 04030392.7
(22) Anmeldetag: 22.12.2004
(51) Int. Cl.: C04B 28/00, E04C 2/06

(54) **Holzfaserhaltige Lehmplatte und Verfahren zu deren Herstellung**
Clay board comprising wood and method for preparation of said board
Panneau à base de glaise contenant du bois et procédé de sa fabrication

(43) Veröffentlichungstag der Anmeldung: 28.06.2006
(73) Patentinhaber: Pavatex SA, 1701 Fribourg (CH)
(72) Erfinder: Locher Gion, Toni, 1784 Wallenried (CH); Palachev, Ianko, 1700 Fribourg (CH)
(74) Vertreter: Blum, Rudolf Emil

(56) Entgegenhaltungen:
- EP-A- 0 632 101
- EP-A- 1 108 697
- DE-A1- 10 208 837
- DE-C1- 4 132 009
- FR-A- 631 149
- GB-A- 1 468 239
- DATABASE WPI Section Ch, Week 198110 Derwent Publications Ltd., London, GB; Class A18, AN 1981-16333D XP002334750 & JP 55 167193 A (KURARAY CO LTD) 26. Dezember 1980 (1980-12-26)

## Beschreibung

Die vorliegende Erfindung betrifft eine holzfaserhaltige Lehmplatte für die Beplankung von Ständerkonstruktionen und flächigen Untergründen im Innenbereich als Trägerplatte für Putze, Anstriche etc, die sich gut schneiden und direkt verputzen lässt, sowie ein Verfahren, das die einfache Herstellung solcher Platten in gleichbleibender Qualität ermöglicht.

Platten, die Lehm und Holzbestandteile enthalten sind bereits bekannt. Beispielsweise beschreibt DE 102 08 837 Bausteine oder Platten aus wasserfeuchtem Lehm, zerkleinertem Holz und einem Bindemittel. GB 1,468,239 beschreibt primär die Herstellung von Mineralfaserplatten, erwähnt aber auch die Herstellung von Holzfaserplatten, wobei der Gehalt an Mineral- resp. Holzfaser resp. -wolle über 50 % beträgt, bei einem Lehmghalt von 0 bis 25 %. Aus DE 102 17 185 sind bereits Lehmplatten bekannt, welche eine Holzwollarmierung enthalten und EP 0 535 000 beschreibt Platten mit einer Kernschicht aus lehmgebundenen nachwachsenden Materialien wie Stroh, eingebettet in netzartige Materialien.

Alle diese Platten weisen diverse Nachteile auf, wie aufwändige Herstellung, starke Qualitätsschwankungen, schlechte Zerschneidbarkeit, mangelnde Festigkeit, schlechte Haftung des Verputzes etc.

Ziel der vorliegenden Erfindung war es deshalb eine Zusammensetzung zu finden, die sich bei homogen guter Qualität leicht herstellen lässt und sich durch gute Verarbeitbarkeit, wie Grössenanpassung durch Zurechtschneiden und gute Haftung des Verputzes auszeichnet.

Dieses Ziel wurde erreicht durch Bereitstellen einer Holzfasern enthaltenden Lehmplatte gemäss Anspruch 1. Diese enthält die Holzfasern in möglichst vereinzelter, homogen verteilter Form. Dabei haben sich mittels eines thermomechanischen Verfahrens hergestellte Holzfasern als speziell vorteilhaft erwiesen.

Überraschenderweise wurde nun gefunden, dass sich eine Lehmplatte mit guter Stabilität und Elastizität, guter Haftung des Verputzes und guter Zertrennbarkeit herstellen lässt, wenn diese die folgende Zusammensetzung aufweist:
(i) 60 bis 85 Masse-% an anorganischen, mineralischen Stoffen, wobei die anorganischen, mineralischen Stoffe aus mindestens 70 Masse-% Lehm und maximal 30 Masse-% mindestens eines Entwässerungshilfsstoffs bestehen,
(ii) 10 bis 40 Masse-% mindestens eines Holzfaserstoffs,
(iii) 0 bis 1 Masse-% mindestens eines Hydrophobierungsmittels
(iv) 0 bis 3 Masse-% mindestens eines organischen Bindemittels,
(v) 0 bis 1 % weitere Prozesshilfsstoffe.

Vorzugsweise besteht die erfindungsgemässe Lehmplatte aus:
(i) 60 bis 65 Masse-% an anorganischen, mineralischen Stoffen, wobei die anorganischen, mineralischen Stoffe aus 70 bis 90 Masse-% Lehm und 10 bis 30 Masse-% mindestens eines Entwässerungshilfsstoffs bestehen,
(ii) 30 bis 35 Masse-% mindestens eines Holzfaserstoffs,
(iii) 0 bis 1 Masse-% mindestens eines Hydrophobierungsmittels
(iv) 0 bis 3 Masse-% mindestens eines organischen Bindemittels,
(v) 0 bis 1 Masse-% weiterer Prozesshilfsstoffe.

Im Rahmen dieser Erfindung wird unter Lehm eine Mischung verstanden, die aus Ton, Sand und Schluff sowie üblicherweise weiteren anorganischen Stoffen ohne Entwässerungswirkung resp. ohne die Entwässerung fördernden Eigenschaften besteht. Ein gut geeigneter Lehm hat die folgende Zusammensetzung (Masse-% geglüht):

| | |
|---|---|
| SiO₂ | 74-78 |
| Al₂O₃ | 11-13 |
| Fe₂O₃ | 4-6 |

Daneben können weitere Stoffe vorhanden sein, wie CaO, TiO₂, MgO, K₂O, Na₂O, etc.

Eine spezieller Lehm hat eine Zusammensetzung wie folgt:

| | |
|---|---|
| SiO₂ | ca. 76.5 |
| Al₂O₃ | ca. 12.0 |
| Fe₂O₃ | ca. 5.0 |
| CaO | ca. 2.5 |
| TiO₂ | ca. 1.0 |
| MgO | ca. 1.0 |
| K₂O | ca. 2.0 |
| Na₂O | ca. 0.25 |

Ein für die erfindungsgemässe Lehmplatte vorzugsweise eingesetzter Lehm weist eine Schüttdichte von 1.0 bis 1.25 g/cm³ auf.

Der neben dem Lehm üblicherweise auch vorhandene Entwässerungshilfsstoff ist vorzugsweise ausgewählt aus der Gruppe umfassend Calciumcarbonat, Calciumoxid, Calciumsulfat und Mischungen derselben, insbesondere aber besteht er hauptsächlich, speziell bevorzugt vollständig, aus Calciumcarbonat.

Vorzugsweise weist der Entwässerungshilfsstoff eine Korngrössenverteilung von 0.1 bis 1.5 mm auf, und der Lehm eine solche von >0 bis 1.0 mm.

Geeignete Hydrophobierungsmittel umfassen hydrophobe Kohlenwasserstoffe, insbesondere unsubstituierte verzweigte und lineare Kohlenwasserstoffe, und Mischungen derselben. Speziell bevorzugtes Hydrophobierungsmittel ist Paraffin.

Das organische Bindemittel dient zur Erhöhung der Elastizität und der Festigkeit der Platte. Sehr gut geeignet sind elastische Bindemittel wie z.B. ein Latex auf der Basis von Styrolbutadien.

Die gegebenenefalls vorhandenen Prozesshilfsstoffe dienen nicht der Einstellung der Eigenschaften der fertigen Platte sondern lediglich der Verbesserung der Eigenschaften während de Herstellung im Nassverfahren. Bei diesen Stoffen handelt es sich beispielsweise um Flockungshilfsmittel, wie Aluminiumsulfat und/oder hochmolekulare anionische oder kationische Polymere

Eine derzeit speziell bevorzugte Platte weist die folgende Zusammensetzung auf:
(i) ca. 60 Masse-% an anorganischen, mineralischen Stoffen, wobei die anorganischen, mineralischen Stoffe aus ca. 70 Masse-% Lehm und ca. 30 Masse-% Calciumcarbonat bestehen,
(ii) ca. 36 Masse-% mindestens eines Holzfaserstoffs,
(iii) ca. 1 Masse-% Paraffin
(iv) ca. 3 Masse-% Styrolbutadien-Copolymer.

Die Herstellung der erfindungsgemässen Lehmplatten kann kontinuierlich in einem Nassverfahen erfolgen. Dabei wird eine Aufschlämmung bereitgestellt, welche die Bestandteile der Lehmplatte aufgeschlämmt in mindestens 20 Masse-% Wasser, üblicherweise aber ca. 80 - 90 Masse-% Wasser, bezogen auf die Bestandteile der Platte enthält. Diese Aufschlämmung wird dann kontinuierlich auf ein randseitig begrenztes Siebband aufgebracht, welches die Feststoffe zurückhält aber durchlässig für Wasser ist. Die Aufschlämmung auf dem Siebband wird unter Entfernung mindestens eines Teils des Wassers zu einem in Platten auftrennbaren Strang geformt und anschliessend getrocknet.

Während der Formung wird mindestens ein Teil des Wassers mittels Gravitation und vorzugsweise zudem durch Pressen entfernt.

Bei der Formung wird der Wassergehalt üblicherweise auf 40 bis 60 Masse-% reduziert, vorzugsweise auf ca. 40 Masse-%.

Geeigneterweise erfolgt die Formung auf einem Siebband, das im Randbereich über eine geeignete Länge mit Stegen versehen ist. Diese Stege bilden zusammen mit dem Band eine Form zur Begrenzung des zu formenden Strangs. Die Formung des Strangs kann bei Bedarf durch Pressen, z.B. mittels Rollenpressen, unterstützt werden. Das Pressen erleichtert gleichzeitig die Entwässerung des Stranges.

Die Trocknung erfolgt üblicherweise bei 160 bis 250°C, vorzugsweise bei ca. 180°C. Im kontinuierlichen Formungsverfahren ist Trocknung in einem Durchlaufofen, z.B. mittels heisser Luft, bevorzugt. Dabei kann der Strang bereits vor der Endtrocknung in Platten aufgetrennt worden sein oder er kann auch erst nach vollständiger Trocknung aufgetrennt werden.

Bei Auftrennung des Strangs in Platten vor der Endtrocknung eröffnet sich die Möglichkeit einer Zwischenlagerung, was insbesondere bei unterschiedlich schnell verlaufenden Verfahrensschritten vorteilhaft ist, sowie die Möglichkeit der (teilweisen) Lufttrocknung sowie der Trocknung in parallel angeordneten Öfen, wobei es sich bei diesen Öfen neben stationären Öfen durchaus auch um Durchlauföfen handeln kann.

Die erfindungsgemässen Lehmplatten eignen sich insbesondere für die Beplankung von Ständerkonstruktionen sowie flächigen Untergründen im Innenbereich. Sie lassen sich ohne weitere Vorbehandlung mit Putzen und Anstrichen etc. versehen. Bevorzugte Lehmplatten weisen zudem gute wärme- und schalldämmende Eigenschaften auf.

Vorzugsweise zeigen die erfindungsgemässen Lehmplatten die folgenden Eigenschaften gemäss Tabelle 1:

**Tabelle 1:**

| Eigenschaft | Einheit | Prüfnorm | Zielwert | Toleranz |
|---|---|---|---|---|
| | | | [bevorzugt] | [bevorzugt] |
| Dicke | mm | EN 324-1 | ca.20.0 | 12.0 - 25.0 |
| Dichte | kg/m³ | EN 323 | 600 ±50 [ca. 600] | 500 - 900 [500 - 700] |
| Biegefestigkeit | N/mm² | EN 310 | mind. 2,0 | mind. 1.5 |
| Dickenquellung | % | EN 317 | max. 2 | max. 15 |

Vorzugsweise liegt die Dichte in einem Bereich von 500 bis 700 kg/m³, insbesondere in einem Bereich von 550 bis 650 kg/m³.Die Erfindung wird in der Folge nun anhand eines den Umfang der in den Ansprüchen dargelegten Erfindung nicht beschränkenden Beispiels näher beschrieben.

### Beispiel

Es wurde eine Lehmplatte mit der folgenden Zusammensetzung hergestellt:
(i) 83 Masse-% an anorganischen, mineralischen Stoffen, wobei die anorganischen, mineralischen Stoffe aus 65 Masse-% Lehm und 35 Masse-% Calciumcarbonat bestehen,
(ii) 12.7 Masse-% Holzfasern,
(iii) 0.5 Masse-% Paraffin
(iv) 3 Masse-% Latex (Styrolbutadien-Copolymer)
(v) 0.8 Masse-% Prozesshilfsstoffe (davon 0.7 Masse-% Aluminiumsulfat und 0.1 Masse-% Zetag 0.1%)

Der Lehm hatte die folgende Zusammensetzung:

| | |
|---|---|
| SiO₂ | 76.33 |
| Al₂O₃ | 12.06 |
| Fe₂O₃ | 5.01 |
| CaO | 2.42 |
| TiO₂ | 1.07 |
| MgO | 0.91 |
| K₂O | 2.05 |
| Na₂O | 0.26 |

Die Korngrössenverteilung (ermittelt anhand des Rückstands auf dem Luftstrahlsieb) war wie folgt:

| | |
|---|---|
| 0 - 90 µm | 75% |
| 90-200 µm | 20% |
| 200-1000 µm | 5% |

Ca. 13000 kg einer Aufschlämmung enthaltend 20 Masse-% der obengenannten Zusammensetzung und 80 Masse-% Wasser wurde dann auf ein Band von 2.6 m Breite, das im Randbereich über eine Länge von 3 m mit 50 cm hohen Stegen versehen war, gegeben. Diese Stege bilden zusammen mit dem Band eine Form zur Begrenzung des zu formenden Strangs. Die Formung des Strangs kann bei Bedarf durch Pressen, z.B. mittels Rollenpressen, unterstützt werden. Das Pressen erleichtert gleichzeitig die Entwässerung des Stranges. Dieser wurde bis zum Eintritt in einen kontinuierlich arbeitenden Ofen (Heissluft, Temperatur = 190°C) auf einen Wassergehalt von ca. 40 Masse-% entwässert. Die Durchlaufzeit durch den Ofen wurde so eingestellt, dass die Temperatur im Innern des Strangs auf ca. 95°C anstieg. Nach Austritt aus dem Ofen wurde der Strang zu Platten geschnitten.

Die derart hergestellten Platten zeigten bei der gewünschten Dicke von ca. 20 mm die folgenden Eigenschaften:
In bezug auf die Wunschparameter ergaben die gemäss Beispiel hergestellten Platten folgende Resultate:

**Tabelle 2:**

| Eigenschaft | Einheit | Prüfnorm | Zielwert [spez. bevorzugt] | gefundener Wert |
|---|---|---|---|---|
| Dicke | mm | EN 324-1 | 20.0 | 20.4 |
| Dichte | kg/m³ | EN 323 | 550-650 | 552 |
| | | | [ca. 600] | |
| Biegefestigkeit | N/mm² | EN 310 | mind.2,0 | 2.3 |
| Dickenquellung | % | EN 317 | max. 2.0 | 1.6 |

## Patentansprüche

1. Lehmplatte bestehend aus
(i) 60 bis 85 Masse-% an anorganischen, mineralischen Stoffen, wobei die anorganischen, mineralischen Stoffe aus mindestens 70 Masse-% Lehm und maximal 30 Masse-% mindestens eines Entwässerungshilfsstoffs bestehen,
(ii) 10 bis 40 Masse-% mindestens eines Holzfaserstoffs,
(iii) 0 bis 1 Masse-% mindestens eines Hydrophobierungsmittels,
(iv) 0 bis 3 Masse-% mindestens eines organischen Bindemittels,
(v) 0 bis 1 Masse-% weitere Prozesshilfsstoffe.

2. Lehmplatte gemäss Anspruch 1, **dadurch gekennzeichnet, dass** der Holzfaserstoff aus Holzfasern besteht, wie sie mittels thermomechanischen Verfahren erhältlich sind.

3. Lehmplatte gemäss einem der vorangehenden Ansprüche, **dadurch gekennzeichnet, dass** der Lehm eine Schüttdichte von 1.0 bis 1.5 g/cm³ aufweist.

4. Lehmplatte gemäss einem der vorangehenden Ansprüche, **dadurch gekennzeichnet, dass** der Entwässerungshilfstoff eine Korngrössenverteilung von 0.1 bis 1.5 mm aufweist und/oder der Lehm eine solche von >0 bis 1.0 mm.

5. Lehmplatte gemäss einem der vorangehenden Ansprüche, **dadurch gekennzeichnet, dass** das Hydrophobierungsmittel Paraffin ist.

6. Lehmplatte gemäss einem der vorangehenden Ansprüche, **dadurch gekennzeichnet, dass** das organische Bindemittel ein Latex, insbesondere ein Styrolbutadien-Copolymer, ist.

7. Lehmplatte gemäss einem der vorangehenden Ansprüche, **dadurch gekennzeichnet, dass** der Entwässerungshilfsstoff ausgewählt ist aus der Gruppe umfassend Calciumcarbonat, Calciumoxid, Calciumsulfat und Mischungen derselben, insbesondere Calciumcarbonat.

8. Lehmplatte gemäss einem der vorangehenden Ansprüche, **dadurch gekennzeichnet, dass** sie aus
(i) 60 bis 65 Masse-% an anorganischen, mineralischen Stoffen, wobei die anorganischen, mineralischen Stoffe aus 70 bis 90 Masse-% Lehm und 10 bis 30 Masse-% mindestens eines Entwässerungshilfsstoffs bestehen,
(ii) 30 bis 35 Masse-% mindestens eines Holzfaserstoffs,
(iii) 0 bis 1 Masse-% mindestens eines Hydrophobierungsmittels,
(iv) 0 bis 3 Masse-% mindestens eines organischen Bindemittels,
(v) 0 bis 1 Masse-% weiterer Prozesshilfsstoffe
besteht.

9. Lehmplatte gemäss einem der Ansprüche 1 bis 7, **dadurch gekennzeichnet, dass** sie aus
(i) 60 Masse-% an anorganischen, mineralischen Stoffen, wobei die anorganischen, mineralischen Stoffe aus 70 Masse-% Lehm und 30 Masse-% Calciumcarbonat bestehen,
(ii) 36 Masse-% mindestens eines Holzfaserstoffs,
(iii) 1 Masse-% Paraffin,
(iv) 3 Masse-% Styrolbutadien-Copolymer besteht.

10. Verfahren zur kontinuierlichen Herstellung einer Lehmplatte gemäss einem der vorangehenden Ansprüche, **dadurch gekennzeichnet, dass** eine Aufschlämmung bereitgestellt wird, welche die Bestandteile der Lehmplatte aufgeschlämmt in mindestens 20 Masse-% Wasser, vorzugsweise 80 - 90 Masse-% Wasser, bezogen auf die Bestandteile der Platte enthält, dass diese Aufschlämmung kontinuierlich auf ein randseitig begrenztes Siebband aufgebracht wird, welches die Feststoffe zurückhält aber durchlässig für Wasser ist, dass die Aufschlämmung auf dem Band unter Entfernung mindestens eines Teils des Wassers zu einem in Platten auftrennbaren Strang geformt und anschliessend getrocknet wird.

11. Verfahren gemäss Anspruch 10, **dadurch gekennzeichnet, dass** die Formung unter Entfernung mindestens eines Teils des Wassers mittels Gravitation und Pressen erfolgt.

12. Verfahren gemäss Anspruch 10 oder 11, **dadurch gekennzeichnet, dass** bei der Formung der Wassergehalt auf 40 bis 60 Masse-% reduziert wird.

13. Verfahren gemäss einem der Ansprüche 10 bis 12, **dadurch gekennzeichnet, dass** die Trocknung bei 160 bis 250°C erfolgt.

14. Verfahren gemäss einem der Ansprüche 10 bis 13, **dadurch gekennzeichnet, dass** die Trocknung in einem Durchlaufofen erfolgt und der Strang nach der Trocknung in Platten aufgetrennt wird.

15. Verfahren gemäss einem der Ansprüche 10 bis 13, **dadurch gekennzeichnet, dass** der Strang vor der Trocknung in Platten aufgetrennt wird und die Trocknung der Platten gegebenenfalls nach Lufttrocknung in einem stationären Ofen oder in einem Durchlaufofen erfolgt.

16. Verwendung einer Lehmplatte gemäss einem der Ansprüche 1 bis 9 als Beplankung von Ständerkonstruktionen sowie flächigen Untergründen im Innenbereich als Trägerplatte für Putze und Anstriche.

17. Verwendung gemäss Anspruch 16, **dadurch gekennzeichnet, dass** die Lehmplatte zusätzlich der Wärme- und/oder Schalldämmung dient.

## Claims

1. Clay board consisting of
(i) 60 to 85 % by mass of inorganic mineral materials, wherein the inorganic mineral materials consist of at least 70 % by mass of clay and at most 30 % by mass of at least one dehydrating aid,
(ii) 10 to 40 % by mass of at least one wood fiber material,
(iii) 0 to 1 % by mass of at least one hydrophobizing agent,
(iv) 0 to 3 % by mass of at least one organic binder,
(v) 0 to 1 % by mass of further processing aids.

2. Clay board according to claim 1, **characterised in that** the wood fiber material consists of wood fibers, as they are obtainable by means of thermo mechanical methods.

3. Clay board according to anyone of the preceding claims, **characterised in that** the clay has a bulk density of 1.0 to 1.5 g/cm³.

4. Clay board according to anyone of the preceding claims, **characterised in that** the dehydrating aid has a particle size distribution of 0.1 to 1.5 mm and/or the clay has such one of >0 to 1.0 mm.

5. Clay board according to anyone of the preceding claims, **characterised in that** the hydrophobizing agent is paraffin.

6. Clay board according to anyone of the preceding claims, **characterised in that** the organic binder is a latex, in particular a styrene-butadiene-copolymer.

7. Clay board according to anyone of the preceding claims, **characterised in that** the dehydrating aid is selected from the group comprising calcium carbonate, calcium oxide, calcium sulfate and mixtures thereof, in particular calcium carbonate.

8. Clay board according to anyone of the preceding claims, **characterised in that** it consists of
(i) 60 to 65 % by mass of inorganic mineral materials, wherein the inorganic mineral materials consist of 70 to 90 % by mass of clay and of 10 to 30 % by mass of at least one dehydrating aid,
(ii) 30 to 35 % by mass of at least one wood fiber material,
(iii) 0 to 1 % by mass of at least one hydrophobizing agent
(iv) 0 to 3 % by mass of at least one organic binder,
(v) 0 to 1 % by mass of further processing aids.

9. Clay board according to anyone of claims 1 to 7, **characterised in that** it consists of
(i) 60 % by mass of inorganic mineral materials, wherein the inorganic mineral materials consist of 70 % by mass of clay and of 30 % by mass of calcium carbonate,
(ii) 36 % by mass of at least one wood fiber material,
(iii) 1 % by mass of paraffin
(iv) 3 % by mass of styrene-butadiene-copolymer.

10. Method for the continuous production of a clay board according to anyone of the preceding claims, **characterised in that** a slurry is provided that contains the constituents of the clay board suspended in at least 20 % by mass, preferably about 80 to 90 % by mass of water referred to the constituents of the board, that said slurry is continuously applied to a marginally bordered filter band that retains the solids but is permeable to water, that under removal of at least part of the water the slurry on the band is formed into a strand separable into boards and subsequently dried.

11. Method according to claim 10, **characterised in that** the forming under removal of at least part of the water is performed with gravitation and pressing.

12. Method according to claim 10 or 11, **characterised in that** during forming the water content is reduced to 40 to 60 % by mass.

13. Method according to anyone of claims 10 to 12, **characterised in that** the drying is performed at 160 to 250°C.

14. Method according to anyone of claims 10 to 13, **characterised in that** the drying is performed in a continuous furnace and that after drying the strand is separated into boards.

15. Method according to anyone of claims 10 to 13, **characterised in that** the strand is separated into boards prior to drying and that, optionally after air drying, the drying of the plates takes place in a stationary furnace or in a continuous furnace.

16. Use of a clay board according to anyone of claims 1 to 9 as internal lining of frame constructions as well as of plane bases as carrier board for plasters and coatings.

17. Use according to claim 16, **characterised in that** the clay board additionally serves the thermal insulation and/or the sound insulation.

## Revendications

1. Plaque d'argile constituée de :
(i) de 60 à 85 % en masse de matières minérales, les matières minérales étant constituées d'au moins 70 % en masse d'argile et d'au plus 30 % en masse d'au moins une substance auxiliaire d'évacuation d'eau,
(ii) de 10 à 40 % en masse d'au moins une substance constituée de fibres de bois,
(iii) de 0 à 1 % en masse d'au moins un agent d'hydrophobisation,
(iv) de 0 à 3 % en masse d'au moins un liant organique et
(v) de 0 à 1 % d'autres substances auxiliaires de traitement.

2. Plaque d'argile selon la revendication 1, **caractérisée en ce que** la substance à base de fibres de bois est constituée de fibres de bois obtenues par un procédé thermomécanique.

3. Plaque d'argile selon l'une des revendications précédentes, **caractérisée en ce que** l'argile présente une masse spécifique en vrac comprise entre 1,0 et 1,5 g/cm³.

4. Plaque d'argile selon l'une des revendications précédentes, **caractérisée en ce que** la substance auxiliaire d'évacuation d'eau présente une répartition granulométrique comprise entre 0,1 et 1,5 mm, et/ou **en ce que** l'argile présente une répartition granulométrique comprise entre > 0 et 1,0 mm.

5. Plaque d'argile selon l'une des revendications précédentes, **caractérisée en ce que** l'agent d'hydrophobisation est la paraffine.

6. Plaque d'argile selon l'une des revendications précédentes, **caractérisée en ce que** le liant organique est un latex et en particulier un copolymère de styrène et de butadiène.

7. Plaque d'argile selon l'une des revendications précédentes, **caractérisée en ce que** l'agent auxiliaire d'évacuation d'eau est sélectionné dans l'ensemble constitué du carbonate de calcium, de l'oxyde de calcium, du sulfate de calcium et du mélange de ceux-ci, et en particulier du carbonate de calcium.

8. Plaque d'argile selon l'une des revendications précédentes, **caractérisée en ce qu'**elle est constituée de :
(i) de 60 à 65 % en masse de substances minérales, les substances minérales étant constituées de 70 à 90 % en masse d'argile et de 10 à 30 % en masse d'au moins une substance auxiliaire d'évacuation d'eau,
(ii) de 30 à 35 % en masse d'au moins une substance constituée de fibres de bois,
(iii) de 0 à 1 % en masse d'au moins un agent d'hydrophobisation,
(iv) de 0 à 3 % en masse d'au moins un liant organique et
(v) de 0 à 1 % en masse d'autres substances auxiliaires de traitement.

9. Plaque d'argile selon l'une des revendications 1 à 7, **caractérisée en ce qu'**elle est constituée de :
(i) environ 60 % en masse de substances minérales, les substances minérales étant constituées d'environ 70 % en masse d'argile et d'environ 30 % en masse de carbonate de calcium,
(ii) environ 36 % en masse d'au moins une substance à base de fibres de bois,
(iii) environ 1 % en masse de paraffine et
(iv) environ 3 % en masse d'un copolymère de styrène et de butadiène.

10. Procédé de préparation en continu d'une plaque d'argile selon l'une des revendications précédentes, **caractérisé en ce que** l'on prépare une suspension qui contient les composants de la plaque d'argile en suspension dans au moins 20 % en masse d'eau et de préférence dans 80 à 90 % en masse d'eau par rapport aux composants de la plaque, **en ce que** l'on applique cette suspension en continu sur une bande de tamis dont les bords sont délimités, qui retient les solides mais est perméable à l'eau, **en ce que** la suspension présente sur la bande est transformée en une barre qui peut être découpée en plaques après avoir éliminé au moins une partie de son eau et est ensuite séchée.

11. Procédé selon la revendication 10, **caractérisé en ce que** le façonnage s'effectue par élimination d'au moins une partie de l'eau par gravité et par pressage.

12. Procédé selon les revendications 10 ou 11, **caractérisé en ce que** lors du façonnage, la teneur en eau est réduite à une valeur comprise entre 40 et 60 % en masse.

13. Procédé selon l'une des revendications 10 à 12, **caractérisé en ce que** le séchage est réalisé à une température comprise entre 160 et 250°C.

14. Procédé selon l'une des revendications 10 à 13, **caractérisé en ce que** le séchage est réalisé dans un four continu et **en ce que** la barre est découpée en plaques après son séchage.

15. Procédé selon l'une des revendications 10 à 13, **caractérisé en ce qu'**avant le séchage, la barre est découpée en plaques, et **en ce que** le séchage des plaques s'effectue, éventuellement après séchage à l'air, dans un four stationnaire ou dans un four continu.

16. Utilisation d'une plaque d'argile selon une des revendications 1 à 9, comme planchéiage de structures de socle ainsi que de supports de grandes surfaces en construction intérieure, comme plaques de support pour des enduits et des peintures.

17. Utilisation selon la revendication 16, **caractérisée en ce que** la plaque d'argile sert de plus d'isolation thermique et/ou d'isolation acoustique.
